## Europäisches Patentamt
## European Patent Office
## Office européen des brevets

(11) Veröffentlichungsnummer : **0 315 582 B1**

# (12) EUROPÄISCHE PATENTSCHRIFT

(45) Veröffentlichungstag der Patentschrift :
**05.08.92 Patentblatt 92/32**

(51) Int. Cl.$^5$ : **C01B 3/56**

(21) Anmeldenummer : **88730242.0**

(22) Anmeldetag : **03.11.88**

(54) Verfahren und Vorrichtung zur Reinigung von Wasserstoffgas.

(30) Priorität : **04.11.87 DE 3737843**

(43) Veröffentlichungstag der Anmeldung :
**10.05.89 Patentblatt 89/19**

(45) Bekanntmachung des Hinweises auf die
Patenterteilung :
**05.08.92 Patentblatt 92/32**

(84) Benannte Vertragsstaaten :
**DE ES FR GB IT NL SE**

(56) Entgegenhaltungen :
**EP-A- 0 015 106**
**EP-A- 0 069 941**
**US-A- 4 444 727**
**CHEMICAL ABSTRACTS, Band 104, Nr. 10, 10.**
**März 1986, Seite 112, Zusammenfassung Nr.**
**70770r, Columbus, Ohio, US;**

(73) Patentinhaber : **HWT GESELLSCHAFT FÜR**
**HYDRID- UND WASSERSTOFFTECHNIK MBH**
**Wiesenstrasse 36**
**W-4330 Mülheim/Ruhr (DE)**

(72) Erfinder : **Bernauer, Otto, Dr.rer.nat.**
**Zillestrasse 20**
**W-4130 Moers (DE)**

(74) Vertreter : **Meissner, Peter E., Dipl.-Ing. et al**
**Patentanwaltsbüro Meissner & Meissner,**
**Herbertstrasse 22**
**W-1000 Berlin 33 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Reinigung von Wasserstoffgas unter zyklischer Be- und Entladung von Metallhydridspeichern gemäß dem Oberbegriff des Patentanspruch 1 sowie eine Vorrichtung zur Durchführung dieses Verfahrens.

Es ist bekannt, Hydridspeicher zur Reinigung von verunreinigtem Wasserstoffgas einzusetzen. Man macht sich dabei den Effekt zunutze, daß die aus einem hydridbildenden Metall bestehende Speichermasse beim Beladen mit Wasserstoff den Wasserstoffanteil absorbiert und im Metallgitter bindet, während die Verunreinigungen entweder an der Oberfläche chemiesorbiert werden oder ungebunden bleiben. Das Reingas wird durch Freisetzen des Wasserstoffs beim Entladen des Speichers gewonnen.

Die Konzentration des Wasserstoffs in der Speichermasse ist abhängig von der Temperatur und vom Gasdruck. Beim Beladen des Hydridspeichers wird Wärme freigesetzt (Bildungsenthalpie). Umgekehrt wird bei der Entladung Wärme zum Austreiben des Wasserstoffs aus dem Hydridmaterial benötigt. Üblicherweise werden zum Heizen wie zum Kühlen konventionelle Systeme eingesetzt. Dies bedeutet z.B. die Verwendung von natürlich vorkommendem Oberflächen- oder Grundwasser für die Kühlung und den Einsatz von fossilen Brennstoffen für die Heizung. Der dabei entstehende Energieaufwand liegt bei 0,5 kWh/m³ Wasserstoff und stellt somit einen erheblichen Betriebskostenfaktor dar.

Aus der US-PS 4 444 727 ist eine Wasserstoffreinigungsanlage bekannt, die zwei im Gegentakt arbeitende Metallhydridspeicher enthält. Beide Hydridspeicher sind mit je einem Wärmeaustauscher ausgerüstet, die beide zwecks gegenseitigem Wärmeaustausch miteinander gekoppelt sind. Das bedeutet, daß die beim Beladen eines Hydridspeichers mit Wasserstoffrohgas frei werdende Wärme über die beiden Wärmeaustauscher und das sie verbindende Leitungssystem dem anderen Hydridspeicher zugeführt wird, der gerade entladen wird und entsprechende Wärme zur Freisetzung des Wasserstoffreingases benötigt. Der Energieverbrauch zur Wasserstoffreinigung soll mit dieser Lösung praktisch eliminiert werden.

Diese Reinigungsanlage kann jedoch in verschiedener Hinsicht nicht befriedigen. Ein wesentlicher Mangel besteht darin, daß die Speichermasse der beiden Hydridspeicher durch Chemiesorption von bestimmten Verunreinigungen des Wasserstoffrohgases mit jedem Be-/Entladezyklus stärker verschmutzt wird, so daß dessen Reinigungskapazität im Zeitverlauf ständig abnimmt bis hin zur völligen Unbrauchbarkeit. Dadurch wird nach einer gewissen Betriebszeit der Austausch der beiden Hydridspeicher unvermeidbar.

Ein weiterer Mangel ist darin zu sehen, daß zwar vor der ersten Beladung des Hydridspeichers mit Rohwasserstoff das Speichervolumen evakuiert und damit von Verunreinigungen befreit wird. Bei jeder Entladung bleiben jedoch Verunreinigungen, die nicht von der Speichermasse absorbiert werden, im abgegebenen "Rein"-Gas enthalten, da keine Vorkehrungen getroffen sind, um zu Beginn eines Entladezyklusses das verunreinigte Kopfgas anderweitig abzuführen und erst nach einer ausreichenden Durchspülung des Hydridspeichers mit freigesetztem Wasserstoffgas das wirklich hochgradig reine Wasserstoffgas an die Wasserstoffverbrauchsstelle abzugeben.

Aus diesem Grunde schwankt die Qualität des Reingases während eines Zyklus. Wollte man diesen Mangel beheben und entsprechende Vorrichtungen zur Abführung des verunreinigten Kopfgases vorsehen, so würde sich ein anderer Mangel zeigen: Während der Freisetzung des Kopfgases müssen beide Hydridspeicher gleichzeitig entladen werden, so daß beiden gleichzeitig Wärme zugeführt werden muß. Damit ist aber das grundlegende Funktionsprinzip des wechselseitigen Wärmeaustauschs zumindest in dieser Phase durchbrochen. Die Konsequenz daraus ist, daß die kontinuierliche Reingasabgabe zeitweilig nicht gewährleistet ist. Um diese Beeinträchtigung zu vermeiden, könnten beispielsweise ein Reingaspufferspeicher oder aber auch eine erhebliche Überdimensionierung der Hydridspeicher vorgesehen werden. Im letzteren Fall dürfte von der tatsächlichen Kapazität des in der Entladung befindlichen Hydridspeichers jeweils nur soviel genutzt werden, daß trotz der ausbleibenden Wärmezufuhr während des Abblasens des Kopfgases aus dem anderen Hydridspeicher und des dadurch verbundenen Absinkens der Speichertemperatur noch ausreichende Wasserstoffmengen mit genügendem Entladedruck freigesetzt werden können. Beide Lösungen sind mit einer erheblichen Verteuerung der Reinigungsanlage verbunden. Dies gilt auch für eine spezielle Variante der Reinigungsanlage gemäß US-PS 4 444 727, bei der der Wärmeaustausch zwischen den beiden Hydridspeichern über einen zwischengeschalteten Wärmespeicher erfolgt, der gewissermaßen als Wärmepuffer angesehen werden kann. Hierbei entstehen zusätzliche Aufwendungen nicht nur für den Wärmespeicher, die Verbindungsleitungen und die Umwälzpumpen, sondern auch für Wartung und Instandhaltung dieser Anlagenteile.

Aufgabe der Erfindung ist es, eine Reinigungsanlage der gattungsgemäßen Art dahingehend weiterzubilden, daß die geschilderten Nachteile weitestgehend vermieden werden. Insbesondere soll der Betrieb der Reinigungsanlage keine oder nur geringe äußere Zufuhr von Wärme- und Kälteleistung erfordern.

Der Aufwand für Herstellung und Wartung der Anlage soll möglichst gering sein und die Lebensdauer der Hydridspeicher nicht durch reaktive Gaskomponenten verkürzt werden. Dabei soll eine kontinuierliche Abgabe

EP 0 315 582 B1

von Wasserstoffgas mit gleichbleibend hohem Reinheitsgrad von mindestens 100 ppb ständig gewährleistet sein.

Gelöst wird diese Aufgabe durch ein Verfahren mit den Merkmalen des Patentanspruchs 1. Anspruch 2 beinhaltet eine vorteilhafte Weiterbildung des Verfahrens. Eine Vorrichtung zur Durchführung des Verfahrens ist im Anspruch 3 gekennzeichnet. Vorteilhafte Weiterbildungen der Vorrichtung gehen aus den Unteransprüchen 4 - 7 hervor.

Die Erfindung ermöglicht es, daß zum Betrieb der eigentlichen Reinigungssysteme (Hydridspeicher) keine oder nur noch sehr geringe Mengen an Heizenergie von außen zugeführt werden müssen. Somit entfällt auch ein elektrischer Kraftanschluß für die Beheizung. Der Gesamtenergieaufwand zur Reinigung von Wasserstoff geht nahezu gegen null, wenn man vom Stromverbrauch für Steuerung und Regelung absieht.

Dies wird dadurch erreicht, daß der Hydridspeicher mit einem Wärmeträgermedium (z.B. Wasser) umgeben ist, das nach außen sehr gut wärmeisoliert ist. Die bei der Einspeicherung des Wasserstoffs freigesetzte Wärme wird an das Wasser abgegeben und heizt dieses ebenso wie den Hydridspeicher selbst auf. Das Volumen des Wassers ist dabei so dimensioniert, daß bei vollständiger Beladung des Hydridspeichers die freigesetzte Wärme vollständig vom Wasser aufgenommen werden kann. Der Temperaturanstieg richtet sich nach dem Beladedruck und der Wahl des Hydridmaterials.

Die Beladung ist dann abgeschlossen, wenn die Hydridtemperatur und die Temperatur des Wärmeträgermediums sich weitgehend angeglichen haben, also sich höchstens noch um einen vorgegebenen Differenzbetrag unterschieden. Die Zeit für die Beladung wird wesentlich durch die Qualität des Wärmetauschs zwischen Speicher und Wasser bestimmt. In der Praxis sind Zeiten bis zu 2 min realisierbar, so daß extrem hohe Wasserstoffdurchsätze pro Zeiteinheit möglich sind.

Nach Abschluß der Beladung ist die zur Entladung notwendige Energie im Wärmespeichermedium und im Hydridspeicher gespeichert. Der Hydridspeicher kann ohne äußere Energiezufuhr entladen werden. Die Entladezeiten sind wiederum von der Schnelligkeit des Wärmetauschs abhängig und können im Extremfall im Minutenbereich liegen. Lediglich für den Fall, daß als Hydridmaterial eine Legierung gewählt wurde, bei der der Entladedruck bei Umgebungstemperatur bereits oberhalb der vorgesehenen Entladegrenze (Restkonzentration an Wasserstoff in der Speichermasse) geringer ist als der geforderte Betriebsdruck auf der Reingasseite, wird eine Ausgleichsheizung mit geringer Leistung benötigt, um die trotz Wärmeisolierung eintretenden Wärmeverluste auszugleichen.

Die Entladung ist abgeschlossen, wenn zwischen Hydridmaterial und Wärmespeichermedium ein weitgehender Temperaturausgleich stattgefunden hat, d.h. wenn ein vorgegebener Temperaturgradient unterschritten wird. In diesem Zustand steht der Hydridspeicher dann wieder zu einer neuen Beladung zur Verfügung. Der Vorteil der erfindungsgemäßen Lösung ist neben der Ersparnis an Energie insbesondere darin zu sehen, daß alle Wasserventile und Wasserleitungen für Heizung und Kühlung entfallen. Somit werden nicht nur die damit verbundenen Investitionskosten, sondern auch die erforderlichen Wartungs- und Instandhaltungskosten eliminiert, die insgesamt einen bedeutenden Kostenfaktor darstellen.

Da der Wärmeaustausch auf die unmittelbare Umgebung jedes Hydridspeichers beschränkt ist, also in jedem Fall nur kurze Wärmefließwege vorliegen, ist außerdem ein sehr schneller Wärmeaustausch möglich. Diese ermöglicht das rasche Be- und Entladen der Hydridspeicher und führt somit zu einer entsprechenden Erhöhung der Durchsatzleistung der Reinigungsanlage.

Das erfindungsgemäße Verfahren und die Anlage zu dessen Durchführung sehen eine Vorreinigungsstufe für das Wasserstoffrohgas vor, bevor dieses den Hydridspeichern zugeleitet wird. In der Vorreinigungsstufe werden bereits die Verunreinigungen, die sich nachteilig auf die Lebensdauer des Hydridspeichermaterials auswirken, ausgefiltert, umgewandelt bzw. absorbiert. Als Einsatzstoff (Gettermaterial) für diesen Zweck eignen sich z.B. hydridbildende Metalle bzw. Legierungen, bei denen die Hydridbildung erst deutlich oberhalb des Höchstdrucks einsetzt, der in der Reinigungsanlage auftreten kann. Das bedeutet, daß während des Reinigungsbetriebes an diesem Gettermaterial keine Hydridbildung erfolgt. Statt dessen werden aber andere Bestandteile des Wasserstoffrohgases vom Gettermaterial chemiesorbiert und können somit nicht mehr zu einer vorzeitigen Verunreinigung der Speichermasse in der eigentlichen Reinigungsstufe führen. Damit ist ein langfristiger Betrieb der Hydridspeicher der Reinigungsstufe gewährleistet. Die ungebunden bleibenden Verunreinigungen des Rohgases werden durch das erfindungsgemäße Abblasen des sogenannten Kopfgases zu Beginn einer Entladephase aus dem Hydridspeicher herausgespült und entfernt, so daß danach nur hochreines Wasserstoffgas abgegeben wird, das ohne weiteres einen Reinheitsgrad von unter 10 ppb aufweisen kann. Das Gettermaterial muß in Abhängigkeit von der Qualität des Rohgases und dem für das Reingas geforderten Reinheitsgrad von Zeit zu Zeit ähnlich wie eine "Opferanode" im Korrosionsschutz gegen frisches Material ausgewechselt werden.

Der dafür erforderliche Aufwand liegt jedoch erheblich unter dem Aufwand für einen Austausch von verschmutzten Hydridspeichern der Hauptreinigungsstufe. Bei entsprechender Konstruktion kann der Austausch sogar während des Betriebs der Anlage ohne Unterbrechung der Reingasabgabe vorgenommen werden.

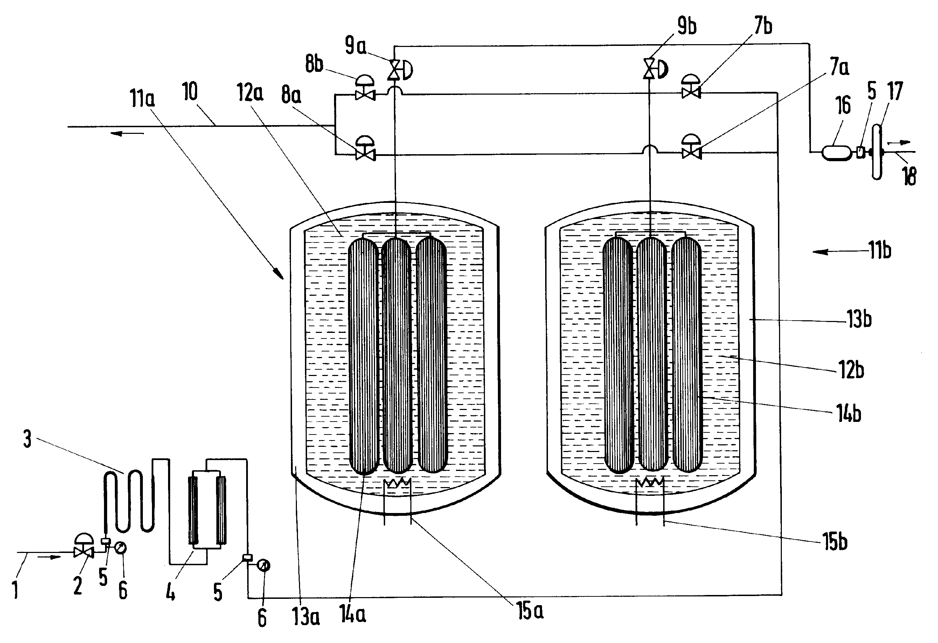

Anhand des in der Figur dargestellten Prinzipbildes einer Gesamtanlage zur Wasserstoffreinigung wird die Erfindung näher erläutert. Aus einem nicht dargestellten Vorratsbehälter wird verunreinigtes Wasserstoffgas unter einem Druck von z.B. 10 bar zur Verfügung gestellt und nach Öffnen des Ventiles 2 durch die Zuleitung 1 in eine aus einem Molekularsieb 3 und einer Getterstufe 4 gebildete Vorreinigung eingeleitet, wo gezielt die Feuchte und der Gehalt der reaktiven Gasbestandteile abgesenkt werden. Gleichzeitig wirkt die Vorreinigungsstufe 3,4 als katalytischer Reaktor für Kohlenstoffmonoxyd und wandelt dieses in leichter zu eliminierenden Kohlenwasserstoff um. Gasdruck und Feuchtegehalt des Wasserstoffs werden über entsprechende Meßgeräte 5, 6 überwacht. Nach Verlassen der Vorreinigung 3, 4 wird das Wasserstoffgas in z.B. den Hydridspeicher 11a eingeleitet und dort in Form von Metallhydrid gespeichert.

Mit zunehmender Speicherbeladung steigt die Temperatur im Hydridspeicher 11a bis auf einen Maximalwert an. Der Hydridspeicher 11a, dessen Speichervolumen durch drei zusammengeschaltete Einzeldruckbehälter 14a gebildet wird, ist von einem Wärmespeichermedium 12a (z.B. Wasser) umgeben, das den wesentlichen Teil der Bildungsenthalpie des Metallhydrids aufnimmt. Da der Hydridspeicher 11a mit einer hochwertigen Wärmeisolierung 13a versehen ist, wird die freigesetzte Wärme nicht an die Umgebung abgegeben.

Wenn im Hydridspeicher 11a und im Wärmespeicher 12a die Maximaltemperatur erreicht ist, ist die Beladung abgeschlossen, und die Wasserstoffzufuhr wird durch ein Absperrventil 7a geschlossen. Während der Beladung waren die zum Hydridspeicher 11a gehörenden Auslaßventile 8a, 9a geschlossen. Da das Hydridmaterial nur den Wasserstoff aufnimmt, bleiben die Fremdgasbestandteile noch im Gasraum des Hydridspeichers 11a enthalten.

Dieses als Kopfgas bezeichnete verunreinigte Wasserstoffgas wird daher zu Beginn der Speicherentladung über die Leitung 10 nach Öffnen des Ventils 8a nach außen abgeblasen und nicht in die Reingasleitung 18 eingeleitet. Erst wenn das Kopfgas abgeführt worden ist und das dafür geöffnete Ventil 8a wieder geschlossen worden ist, wird das Ventil 9a zur Reingasleitung 18 geöffnet, so daß der Reinwasserstoff nach Durchtritt durch die Filter 16 und 17 entnommen werden kann. Die zur Entladung benötigte Wärme wird kontinuierlich aus dem Wärmespeicher 12a entnommen. Mit sinkender Temperatur läßt auch der Entladedruck des Wasserstoffreingases nach. Sobald der Hydridspeicher 11a und der Wärmespeicher 12a die Ausgangstemperatur wieder erreicht haben, also die eingespeicherte Wasserstoffmenge wieder abgegeben worden ist, wird die Entladung beendet. In diesem Betriebspunkt beträgt der Entladedruck immer noch z.B. 5 bar. Ein parallel zum Hydridspeicher 11a angeordneter zweiter Hydridspeicher 11b, dessen Bezugszeichen bei gleichen Teilen durch den Buchstaben b anstelle von a erkenntlich sind, arbeitet während des Be- und Entladezyklus im Gegentakt.

Das bedeutet, daß der Hydridspeicher 11a gerade beladen wird, wenn der Hydridspeicher 11b entladen wird und umgekehrt, so daß eine kontinuierliche Wasserstoffreingas-Entnahme möglich ist. Die Gesamtanlage wird einschließlich der erforderlichen Ventile von einer nicht dargestellten freiprogrammierbaren Steuerung überwacht und gesteuert.

Für den Fall, daß das Hydridmaterial bei Umgebungstemperatur keinen ausreichenden Entladedruck liefert, werden die Hydridspeicher 11a und 11b mit einer Ausgleichsheizung 15a, 15b ausgestattet, um den trotz Wärmeisolierung eintretenden geringen Wärmeverlust auszugleichen.

Die kontinuierliche Reingasentnahme ist auch während des zu Beginn der Entladung eines Hydridspeichers 11a erfolgenden Abblasens des Kopfgases gewährleistet, da der jeweils andere Hydridspeicher 11b in dieser Phase weiterhin noch Reingas mit ausreichendem Entladedruck zur Verfügung stellen kann. Während dieser Übergangsphase werden also beide Hydridspeicher 11a, 11b gleichzeitig entladen. Dies ist deswegen ohne weiteres möglich, weil die für die Hydridspeicherentladung erforderliche Wärme zu jeder Zeit für jeden der beiden Hydridspeicher 11a, 11b in seinem eigenen Wärmespeicher 12a, 12b zur Verfügung steht. Damit ist eine vollständige Entkopplung der Wärmehaushalte der beiden beteiligten Hydridspeicher 11a, 11b gegeben, so daß in dieser Hinsicht ein völlig anderes Verfahrens- und Vorrichtungsprinzip zur Anwendung kommt als bei der Wasserstoffreinigungsanlage gemäß US-PS 4 444 727. Dabei basiert die erfindungsgemäße Lösung darauf, daß der von einem Wärmeträgermedium 12a, 12b durchströmte äußere Behältermantel (Wärmeisolierung 13a, 13b), der zur Bewirkung eines Wärmeaustauschs mit der Speichermasse in der Hydridspeichertechnik an sich völlig geläufig ist, so dimensioniert wird, daß er die Funktion eines Wärmespeichers übernimmt und die gesamte Bindungsenthalpie aus der Speicherbeladung aufzunehmen vermag. Rohrleitungen, Pumpen und Ventile zur Steuerung der Zu- und Abführung des Wärmeträgermediums entfallen dabei vollständig.

Die Auslegung einer erfindungsgemäßen Wasserstoffreinigungsanlage wird anhand des nachfolgenden Zahlenbeispiels erläutert. Zugrundegelegt wird ein Hydridspeicher mit 7,5 kg Speichermasse, dessen reversible Speicherkapazität für Wasserstoff 1,2 Gewichts-% beträgt. Das Gesamtgewicht des Speichers inklusive Druckbehälter beträgt 13,5 kg. Der Hydridspeicher ist in einem Wasserbehälter mit 8 kg Wasserfüllung eingebettet, die nach außen mit einer Vakuum-Super-Isolierung versehen ist, also praktisch keine nennenswerte Wärme nach außen abgibt.

Zur Verbesserung der Wärmleitung zwischen Wasser und Behälterwandung sind an der Außenoberfläche des Hydridspeicherbehälters Rippen aus gut wärmeleitendem Material angeordnet, die in das Wasser eintauchen. Durch die Beladung mit Wasserstoff heizt sich der Hydridspeicher von Raumtemperatur auf eine dem Beladedruck entsprechende Temperatur auf. In diesem Beispiel um 40 K über der Starttemperatur. Die dabei freigesetzte Wärme beträgt:

$$Q = n_{H_2} \times H_{Hydrid} = 1620\ kJ$$

Dabei wurde davon ausgegangen, daß der Wasserstoffumsatz $n_{H_2}$ = 90 g, entsprechend 45 mol und die Hydridbildungsenthalpie $H_{Hydrid}$ = 36 kJ/mol$H_2$ beträgt. Durch die Wärmefreisetzung heizt sich das Gesamtsystem um etwa 40 K auf entsprechend der Beziehung:

$$\Delta T = \frac{Q_{ges}}{C_{P_{Hydridspeicher}} \times m_{Hydridspeicher} + C_{P_{Wasser}} \times m_{Wasser}}$$

Für das gewählte Beispiel gilt:

$$\text{Wärmekapazität des Hydridspeichers } C_{P_{Hydridspeicher}} = 0,54\ kJ/kg\ K$$

$$\text{Masse Hydridspeicher } m_{Hydridspeicher} = 13,5\ kg$$

$$\text{Wärmekapazität Wasser } C_{P_{Wasser}} = 4,184\ kJ/kg\ K$$

$$\text{Masse Wasser } n_{Wasser} = 8\ kg$$

$$\text{Temperaturanstieg } \Delta T = 40\ K$$

Bei der danach folgenden Entladung kühlt sich der Hydridspeicher auf eine dem Entladedruck entsprechende Temperatur ab und aus dem Wärmespeichermedium (Wasser) fließt die zur Wasserstofffreisetzung notwendige Wärme nach. Im vorliegenden Beispiel mit 7,5 kg Hydridmaterial liegen die Be- und Entladezeiten des Systems (Speicherdurchmesser 114 mm, Speicherhöhe 320 mm, Hydridmaterial: $Ti_{0,85}\ Zr_{0,15}\ V_{0,45}\ Fe_{0,1}\ Mn_{1,5}$) bei jeweils etwa 10 min, so daß ein Stundendurchsatz an Wasserstoff von 3 Nm³ möglich ist.

Für den Fall, daß lange Standzeiten der Reinigungsanlage überbrückt werden müssen und gleichzeitig volle Leistungsbereitschaft vorhanden sein muß, kann die Anlage mit einer Ausgleichsheizung ausgerüstet werden, die den Wärmeverlust infolge der nicht idealen Wärmeisolation wieder ausgleicht. Bei dem beschriebenen Beispiel liegt der Wärmeverlust in der Größenordnung von etwa 10 W. Der damit notwendige Energieverbrauch ist gemessen an der Durchflußleistung der Anlage unerheblich.

## Patentansprüche

1. Verfahren zur kontinuierlichen Reinigung von Wasserstoffgas unter zyklischer Be- und Entladung von mindestens zwei zeitlich gegeneinander getakteten Metallhydridspeichern, wobei jeweils in einem ersten Arbeitstakt (Speicherbeladung) Wasserstoffrohgas unter Druck einem Metallhydridspeicher zugeführt und in der Speichermasse als Metallhydrid gespeichert wird, während dessen dem Metallhydridspeicher Wärme entzogen und zwischengespeichert wird, und wobei jeweils in einem zweiten Arbeitstakt (Speicherentladung) der im Metallhydrid gespeicherte Wasserstoff unter Rückführung der zwischengespeicherten Wärme zur Speichermasse als Wasserstoffreingas wieder freigesetzt wird,
dadurch gekennzeichnet,
daß das zu reinigende Wasserstoffgas zunächst einer Vorreinigung unterzogen wird, indem es über ein Gettermaterial geführt wird, bevor es dem Metallhydridspeicher zugeführt wird,
daß die Speicheibeladung mit einem deutlich höheren Druck erfolgt als dem für die Speicherentladung geforderten Mindestdruck,
daß die Zwischenspeicherung der Wärme nahezu verlustlos in einem den Metallhydridspeicher jeweils unmittelbar umgebenden Wärmespeicher erfolgt, wobei gegebenenfalls soviel Wärme von außen zugeführt wird, wie dem Wärmeverlust des Wärmespeichers entspricht,
daß zu Beginn der Entladung das im Metallhydridspeicher enthaltene verunreinigte Kopfgas abgeblasen wird und
daß das Gettermaterial vor Erreichen eines für die Wirksamkeit der Vorreinigung unzulässigen Verunreinigungsgrades gegen reines Gettermaterial ausgetauscht wird.

2. Verfahren nach Anspruch 1,
dadurch gekennzeichnet,
daß das hydridbildende Metall so gewählt wird, daß sein Entladedruck bei Umgebungstemperatur größer ist als der notwendige Betriebsdruck auf der Wasserstoffausgangsseite, und däß keine Wärmeenergie von außen zugeführt wird.

3. Vorrichtung zur Durchführung des Verfahrens nach Anspruch 1 mit mindestens einem Paar von Metallhydridspeichern (11a, 11b), die an eine Rohgaszuleitung (1) und an eine Reingasleitung (18) angeschlossen sind und die jeweils über ein in der Umhüllung (13a, 13b) des Metallhydridspeichers (11a, 11b) enthaltenes Wärmeträgermedium (12a, 12b) mit einem Wärmespeicher zur Zu- und Abfuhr von Wärme in Verbindung stehen,
dadurch gekennzeichnet,
– daß vor den-Metallhydridspeichern (11a, 11b) in der Rohgaszuleitung (1) mindestens eine Vorreinigungsstufe (4) angeordnet ist,
– daß die Umhüllung der Metallhydridspeicher (11a, 11b) außen jeweils eine Wärmeisolierung (13a, 13b) aufweist,
– daß der Wärmespeicher der Metallhydridspeicher (11a, 11b) jeweils durch das in der Umhüllung (13a, 13b) des jeweiligen Metallhydridspeichers (11a, 11b) enthaltene Wärmeträgermedium (12a, 12b) gebildet ist,
– daß eine durch ein Ventil (8a, 8b) verschließbare Leitung (10) zum Abblasen des Kopfgases an die Metallhydridspeicher (11a, 11b) angeschlossen ist und
– daß Ventile (7a, 7b und 9a, 9b) in der Rohgaszuleitung (1) und der Reingasleitung (18) für ein voneinander zeitlich unabhängiges Be- und Entladen der Metallhydridspeicher (11a, 11b) des mindestens einen Metallhydridspeicherpaars angeordnet sind.

4. Vorrichtung nach Anspruch 3,
dadurch gekennzeichnet,
daß das Wärmeträgermedium (12a, 12b) eine Flüssigkeit, insbesondere Wasser ist.

5. Vorrichtung nach Anspruch 3 oder 4,
dadurch gekennzeichnet,
daß die Wärmeisolierung (13a, 13b) als Vakuum-Super-Isolierung ausgeführt ist.

6. Vorrichtung nach einem der Ansprüche 3 - 5,
dadurch gekennzeithnet,
daß die Außenoberfläche der Metallhydridspeicher (11a, 11b) durch Wärmeübertragungsrippen vergrößert ist.

7. Vorrichtung nach einem der Ansprüche 3-6
dadurch gekennzeichnet,
daß der Wärmespeicher (12a, 12b) mit einer Ausgleichsheizung (15a, 15b) für den isolationsbedingten Wärmeverlust ausgestattet ist.

**Claims**

1. A process for the continuous purification of hydrogen gas with cyclic charging and discharging of at least two metal hydride storage containers which are cadenced relative to one another, in which in each case in a first operating cycle (storage container charging) crude hydrogen gas is supplied under pressure to a metal hydride storage container and is stored in the storage substance as a metal hydride, during which heat is removed from the metal hydride storage container and is temporarily stored, and in which in each case in a second operating cycle (storage container discharging) the hydrogen stored in the metal hydride is released again as pure hydrogen gas with recycling of the temporarily stored heat to the storage substance, characterised in that
the hydrogen gas which is to be purified is first subjected to initial purification in that it is passed over a getter material before it is supplied to the metal hydride storage container,
that the storage container charging takes place at a considerably higher pressure than the minimum pressure required for storage container discharging,

that the intermediate storage of the heat takes place virtually without loss in a heat accumulator in each case directly surrounding the metal hydride storage container, with optionally an amount of heat being supplied from outside which corresponds to the heat loss of the heat accumulator,

that at the beginning of discharging the polluted overhead gas contained in the metal hydride storage container is blown off and

that the getter material is replaced by pure getter material before a degree of contamination which is impermissible for the efficiency of the initial purification is reached.

2. A process according to Claim 1,
characterised in that
the hydride-forming metal is selected so that its discharging pressure at ambient temperature is greater than the required operating temperature on the hydrogen exit side, and that no thermal energy is supplied from outside.

3. An apparatus for performing the process according to Claim 1, having at least one pair of metal hydride storage containers (11a, 11b) which are connected to a crude gas supply line (1) and to a pure gas line (18) and which are each connected via a heat transfer medium (12a, 12b) contained in the casing (13a, 13b) of the metal hydride storage container (11a, 11b) to a heat accumulator for supplying and removing heat,
characterised in that

– at least one initial purification stage (4) is located before the metal hydride storage containers (11a, 11b) in the crude gas supply line (1),
– that the casing of the metal hydride storage containers (11a, 11b) in each case has an outer heat insulation means (13a, 13b),
– that the heat accumulator of the metal hydride storage containers (11a, 11b) is formed in each case by the heat transfer medium (12a, 12b) contained in the casing (13a, 13b) of the respective metal hydride storage container (11a, 11b),
– that a line (10) for blowing out the overhead gas, which line can be closed by a valve (8a, 8b), is connected to the metal hydride storage containers (11a, 11b) and
– that valves (7a, 7b and 9a, 9b) are located in the crude gas supply line (1) and the pure gas line (18) for charging and discharging, independent of one another time-wise, of the metal hydride storage containers (11a, 11b) of the at least one pair of metal hydride storage containers.

4. An apparatus according to Claim 3,
characterised in that
the heat transfer medium (12a, 12b) is a liquid, in particular water.

5. An apparatus according to Claim 3 or 4,
characterised in that
the heat insulation means (13a, 13b) is designed as a vacuum super-insulation means.

6. An apparatus according to one of Claims 3 to 5,
characterised in that
the outer surface of the metal hydride storage containers (11a, 11b) is enlarged by heat transfer ribs.

7. An apparatus according to one of Claims 3 to 6,
characterised in that
the heat accumulator (12a, 12b) is equipped with a compensating heating means (15a, 15b) for the heat loss which is due to insulation.

## Revendications

1. Procédé de purification en continu d'un gaz d'hydrogène par chargement et déchargement cycliques d'au moins deux accumulateurs à hydrure métallique fonctionnant en opposition de phase, le gaz brut d'hydrogène étant amené sous pression, au cours d'un premier cycle de travail (chargement d'accumulateur), à un accumulateur à hydrure métallique et emmagasiné dans la substance de l'accumulateur sous forme d'hydrure métallique, de la chaleur étant prélevée à l'accumulateur à hydrure métallique et stockée temporairement, au cours de ce cycle, et l'hydrogène emmagasiné dans l'hydrure métallique est à nouveau libéré sous forme de gaz d'hydrogène pur, au cours d'un second cycle de travail (déchargement de l'accumulateur) tout en restituant à la substance de l'accumulateur, la chaleur stockée temporairement,
caractérisé
en ce que le gaz d'hydrogène à purifier est tout d'abord soumis à une épuration préalable en le faisant passer sur un matériau absorbeur ou getter, avant d'être amené à l'accumulateur à hydrure métallique,
en ce que le chargement de l'accumulateur s'effectue avec une pression nettement supérieure à la pression minimale nécessaire au déchargement de l'accumulateur,

en ce que le stockage temporaire de la chaleur s'effectue pratiquement sans pertes, dans un accumulateur de chaleur entourant directement chacun des accumulateurs, une quantité de chaleur équivalente à la déperdition de chaleur de l'accumulateur de chaleur étant, le cas échéant, amenée de l'extérieur,

en ce qu'au début du déchargement, la fraction de tête de gaz impur renfermé dans l'accumulateur à hydrure métallique, est évacuée par soufflage, et

en ce que la matériau absorbeur ou getter est remplacé par du matériau absorbeur pur, avant d'avoir atteint un degré d'encrassage non admissible pour l'efficacité de la purification préalable.

2. Procédé selon la revendication 1,

caractérisé

en ce que le métal formant un hydrure est choisi de telle sorte que sa pression de déchargement à température ambiante, est supérieure à la pression de fonctionnement nécessaire sur le côté de sortie de l'hydrogène, et qu'aucune énergie calorifique n'est apportée de l'extérieur.

3. Dispositif pour la mise en oeuvre du procédé selon la revendication 1, comportant au moins une paire d'accumulateurs à hydrure métallique (11a, 11b) qui sont raccordés à une conduite d'alimentation en gaz brut (1) et à une conduite de gaz purifié (18), et qui sont chacun en liaison, par l'intermédiaire d'un fluide caloporteur (12a, 12b) renfermé dans une enveloppe (13a, 13b) de l'accumulateur à hydrure métallique (11a, 11b), avec un accumulateur de chaleur pour l'amenée et l'évacuation de chaleur,

caractérisé

– en ce qu'en aval des accumulateurs à hydrure métallique (11a, 11b), dans la conduite d'alimentation en gaz brut (1), est agencé un étage de purification préalable (4),

– en ce que chacune des enveloppes des accumulateurs à hydrure métallique (11a, 11b) comporte extérieurement une isolation thermique (13a, 13b),

– en ce que chacun des accumulateurs de chaleur des accumulateurs à hydrure métallique (11a, 11b) est constitué par le fluide caloporteur (12a, 12b) renfermé dans l'enveloppe (13a, 13b) de l'accumulateur à hydrure métallique (11a, 11b) respectif,

– en ce qu'une conduite (10) pouvant être obturée par une vanne (8a, 8b) et destinée à évacuer par soufflage la fraction de tête du gaz, est raccordée aux accumulateurs à hydrure métallique (11a, 11b), et

– en ce que des vannes (7a, 7b et 9a, 9b) sont disposées dans la conduite d'alimentation en gaz brut (1) et dans la conduite de gaz purifié (18), pour permettre un chargement et un déchargement indépendant l'un de l'autre dans le temps, de ladite au moins une paire d'accumulateurs à hydrure métallique.

4. Dispositif selon la revendication 3,

caractérisé

en ce que le fluide caloporteur (12a, 12b) est un liquide, et notamment de l'eau.

5. Dispositif selon la revendication 3 ou 4,

caractérisé

en ce que l'isolation thermique (13a, 13b) est réalisée en tant que super-isolation par le vide.

6. Dispositif selon l'une des revendications 3 à 5,

caractérisé

en ce que les surfaces extérieures des accumulateurs à hydrure métallique (11a, 11b) sont augmentées par des nervures de transmission de chaleur.

7. Dispositif selon l'une des revendications 3 à 6,

caractérisé

en ce que l'accumulateur de chaleur (12a, 12b) est équipé d'un dispositif de chauffage de compensation (15a, 15b) pour la déperdition de chaleur dûe à l'isolation.